# EUROPEAN PATENT APPLICATION

(11) **EP 2 634 563 A1**
(43) Date of publication of application: **04.09.2013**
(21) Application number: 11835577.5
(22) Date of filing: 15.09.2011
(51) Int. Cl.: G01N 21/65

(54) **SORTER AND SORTING METHOD FOR SEPARATING CELLS AND PARTICLES**

(30) Priority: 29.10.2010 CN 201010526320
(71) Applicant: Beijing Wellsens Biotech Co., Ltd., Beijing 100084 (CN)
(72) Inventor: HUANG, Wei, Beijing 100084 (CN); LI, Mengqiu, Beijing 100084 (CN); ZHANG, Dayi, Beijing 100084 (CN)
(74) Representative: Szabo, Zsolt
(86) International application number: PCT/CN2011/079656
(87) International publication number: WO 2012/055304

(57) **Abstract**

A sorter for separating cells and particles comprises a Raman spectrum collection and analysis system (10), a microfluidic system (11) and a cell/particle sorting system (12). The microfluidic system is connected with the Raman spectrum collection and analysis system, the Raman spectrum collection and analysis system is connected with the cell/particle sorting system, and the cell/particle sorting system is connected with the microfluidic system. Also disclosed is a sorting method for separating cells and particles. The sorter can effectively identify and sort cells, nano-materials, particles and cell inclusions with a size from nanometers to micrometers, and as compared with methods such as fluorescence or radioisotope labelling, etc., it can provide a greater abundance of characteristic information about cells or particles in the same amount of time.

## Description

### TECHNICAL FIELD

The present invention relates to a sorter and sorting method for separating cells and particles, in particular to a sorter and sorting method for separating nano-micron scale cells and particles, belonging to the biotechnology field.

### BACKGROUND OF THE INVENTION

Synthetic biology reconstructs the software (genetic material represented by DNA) and hardware (organelle represented by ribosome) of cells through molecular biology techniques, enabling them to possess certain functions. These living cells can duplicate, and 'as a synthesis plant', transfer those simple and low-cost energy and material (such as sunlight and carbon-dioxide) into high value-added medicine, material and bioenergy, or remove pollutants which are hard to degrade. Just as what have been stated in the report of Britain's Royal Academy of Engineering in 2009, 'synthetic biology is destined to become of critical importance to building the nation's wealth'. However, first of all, the development of synthetic biology must depend on the acquisition of life constituents with innovative functions (gene, protein, cell, community, etc.), which at present are hampered by three major technical bottlenecks.

Firstly, microbes account for almost half of the biomass on the earth, containing numerous unknown functional genes, whereas 99% of microbes in the natural environment have not been cultivated. Thus they cannot be studied and separated by traditional methods. For example, Craig Venter found 148 new microbes and approximately 1.2 million unknown genes within just hundreds of liter seawater in Sargasso, Bermuda. Another research shows that over 18000 kinds of microbes exist in one gram of soil, more than the number of known kinds of prokaryote (16177 kinds). Based upon this, people gradually realize that the microbes that cannot be cultured, as a potential biotic resource, may have inestimable values in many areas such as bioenergy, industrial biocatalysis, environmental remediation, pharmaceutics, etc. Therefore, establishing a platform for recognizing and selecting microbes at the single cell level (micrometer scale) or nanometer scale is of great significance in exploring the gene resources embodied within those uncultivated microbes.

In addition, the information obtained through traditional measurement at the population level cannot truly reflect the bioprocess and mechanism inside the cell. Recent research indicates that cells of the same genotype may show a noticeable variation in phenotype. This, to a great extent, can be attributed to the randomness of gene expression caused by the collision of molecule. The temporal and spatial randomness of gene expression and regulation at the molecular level may result in individual phenotypic differentiation of cells in a population. The study on the mechanism of single cell differentiation can help to reveal cancer pathogenesis, understand the mechanism of cell differentiation and tissue growth, and identify the features of gene expression and cell characteristics. Existing single cell technology mainly depends on metagenomic pyrosequencing and fluorescence activated cell sorting (FACS). The former is the primary means for studying gene expression and uncultivated microbes, depending considerably on the analysis of DNA sequencing. It can neither show the gene expression mechanism, nor separate the microbes with certain functions. The latter is an effective way of sorting cells. However, since most of the living cells have weak or little fluorescence, along with the fact that the labelling process may cause the death of cells, this method cannot be widely applied in the selection of living cells. Most importantly, both metagenomic sequencing and FACS cannot effectively bridge gene expression (under different circumstances) and environmental factors, thus fail to reveal the roles of uncultivated microbes in an ecosystem. Consequently, only by identifying and sorting living single cells can we really comprehend and improve cell functions.

Finally, existing sorting technology of living cells is mainly based on flow cytometry, while its core technology lies in the recognition of cell information. During the recognition process, because scanning time is in proportion to the mass of information acquired, long-span signal scanning can increase information acquired and the resolution ratio, short-span signal scanning can improve efficiency as well as throughput. As a result, selecting the proper scanning time to obtain enough information and higher recognition efficiency is the core technology of information identification. For traditional flow cytometry, the identification of cell/ particle information mainly relies on ordinary light signal, with little information acquired per unit time. Therefore, to meet the requirement of identification efficiency of engineering application, not enough information can be achieved, but only limited parameters such as shape, refractive index, reflective index and fluorescence intensity of the cells/particles are obtained. As an efficient and high-throughput technique, Raman spectroscopy can bring a series of reforms to the technical field of cell/particle sorting. Through the analysis of the spectrum generated by inelastic scattering of special light on chemicals, Raman microscopic spectroscopy can detect the molecular vibrational or rotational energy level of chemical compounds directly. We can acquire the constitution and structure information of the compound by analyzing its Raman spectrum. Raman spectroscopy has the following three major advantages: Firstly, there is no need to label the cell before acquiring its Raman microscopic spectrum, which serves as its chemical fingerprint, and provides abundant information of the chemical compounds, including nucleic acids, proteins, saccharides and lipids within cells, enabling us to identify the cell type, physiological state and phenotypic changes in vivo; Secondly, recent studies show that the through combination of Raman spectroscopy and confocal microscopy Raman optical tweezers can be achieved for single cell analysis. It can not only identify Raman shift of isotope labelling but also combine with fluorescence in situ hybridization (FISH) to analyze the structure and function of a microbial community; Finally, a Raman spectrum can be obtained within microseconds or milliseconds, meeting the needs of high-throughput detection. Based on this, Raman optical tweezers-based screening technology offers a high-throughput sorting for nano-micron scale cells/particles. This non-labelling based technology can be used to effectively analyze the interaction of intracellular metabolites and extracellular cells and particles, hence providing essential information on gene expression, the metabolic function and the interaction among cells at the single cell level.

In summary, establishment of a high-throughput sorting system of cells/particles at the single cell level (nano-micron scale) can solve the bottleneck problems of synthetic biology and extend modern synthetic biology and systems biology techniques to single cell level and uncultured microbial system. This can be applied to cells (including virus, microbial cells, fungal cells, plant cells and animal cells), as well as to other nano-materials, particles and cell contents. It is of great significance for both scientific research and engineering in various areas including material science, environmental microbiology, molecular biology, medicine, biological engineering, bioenergy, etc.

### SUMMARY OF THE INVENTION

This invention offers a sorter and sorting method for separating nano-micron scale cells and particles to solve the bottleneck problems of synthetic biology, that is, the incapability of cell/particle sorting at the single cell level (nano-micron scale) which hampers the application of modern synthetic biology and systems biology means at the single cell level and for uncultured microbial systems.

The present invention provides a technical scheme to solve the above-mentioned technical problems: a sorter for separating cells and particles comprises a Raman spectrum collection and analysis system, a microfluidic system and a cell/particle sorting system; Said microfluidic system is connected with said Raman spectrum collection and analysis system, used for generating Raman signals of the targeted cells/particles under the excitation of a Raman laser and sorting the targeted cells/particles; Said Raman spectrum collection and analysis system is connected with said cell/particle sorting system, used for collecting Raman signals of the targeted cells/particles and generating Raman spectrum signals of the targeted cells/particles; Said cell/particle sorting system is connected with said microfluidic system, used for sorting the targeted cells/particles by controlling said microfluidic system according to the received Raman spectrum signals.

Based on the above mentioned technical proposals, the present invention can also be improved as followings.

Further, said Raman spectrum collection and analysis system comprises a Raman spectrometer, said microfluidic system comprises a microscope stage, a microfluidic device and an injection pump, said cell/particle sorting system comprises a control software, a field controller and a field generator; Said Raman spectrometer is respectively connected with the microfluidic device and the control software; said microscope stage is connected with the microfluidic device, said microfluidic device is connected with the injection pump, said control software is connected with the field controller, said field controller is connected with the field generator; the field generator is connected with the microfluidic device; said microscope stage is used to transport targeted cells/particles and protective liquid to the microfluidic device; said injection pump is used to regulate the speed at which targeted cells/particles and protective liquid are transported to the microfluidic device; said control software is used to identify specificity of the generated Raman spectrum signals and generate and send out a status signal at the same time; said field controller is used to generate a control signal according to the received status signal, and send said control signal to said field generator; said field generator is used to carry out the opening/closing operation on the basis of the control signals received.

Said injection pump keeps the targeted cell/particle solution and the protective liquid as a laminar flow according to the sample features, at the flow rate ranging from 0.1 mm/s to 100 mm/s.

Further, said microfluidic device comprises injection channels, detection and sorting area, and collection channels; Said injection channels are connected with the detection and sorting area, used for injecting targeted cells/particles and the protective liquid and converging them; Said detection and sorting area is connected with the collection channels; Said detection and sorting area comprises Raman spectrum analysis area and cell sorting area, said Raman spectrum analysis area is used to generate Raman signals of the mixed targeted cells/particles and the protective liquid under excitation of the Raman laser, said cell sorting area is used to sort the targeted cells/particles; and said collection channels are used to collect the sorted targeted cells/particles.

The targeted cells/particles in said cell sorting area can be controlled by regulated variable optical, magnetic or electric field to control trajectories of different kinds of cells/particles.

Further, said protective liquid is a buffer solution with the pH value ranging from 5 to 10.

The purpose of using this protective liquid is to enable those cells/particles awaiting for sorting to be a continuous stable pH condition, In the meantime, during the process of converging and transporting of the protective liquid in binary channels, those cells/ particles awaiting for sorting can move in the middle of the channel steadily, so that the Raman spectrum can be identified and sorted further and easier. Therefore, any buffer solutions with a pH ranging from 5 to 10 can be used in the Raman flow sorter in the present invention, for example, 10.8611gNa₂HPO₄ • 2H₂O and 6.0860g NaH₂PO₄ • 2H₂O can be dissolved into 100 ml pure water, shaking until dissolved completely, and adding pure water to a final volume of 1 L again to obtain the sorting protective liquid.

Further, said injection channels comprise a targeted cell/particle channel, a first sorting protective liquid channel and a second sorting protective liquid channel, said first sorting protective liquid channel and second sorting protective liquid channel lie on both sides of the targeted cell/particle channel, and are connected with it; Said detection and sorting area comprises a detection and sorting channel, said detection and sorting channel is connected with the targeted cell/particle channel, the first and second sorting protective liquid channels; Said collecting channels comprise a first collecting channel and a second collecting channel, and said first collecting channel and second collecting channel are connected with the detection and sorting channel.

Said two sorting protective liquid channels can ensure that after the converging of the sample solution and the protective liquid, the sample solution can keep a laminar flow state, and the cells/particles in the sample solution can pass through the acquisition point smoothly one-by-one, steadily and improve the sorting efficiency and accuracy.

Further, said field controller is an acoustic-optical modulator; said field generator is an optical field generator.

Preferably, said optical field generator uses a TTL pulse laser with an accurate delay time ranging from 400nm to 1500nm.

Further, said field controller is an electric modulator; said field generator is an electric field generator.

Preferably, said electric field generator uses a single shot trigger with a delay pulse.

Further, said field controller is an electromagnet controller; said field generator is a magnetic field generator.

Preferably, said field generator uses an electromagnetic coupler.

The present invention also provides a technical scheme to solve the above-mentioned problems: a sorting method for separating cells and particles comprises :
1) converging the cells/particles samples and the sorting protective liquid to form a mixture;
2) generating Raman signals of said mixture under excitation of a Raman laser;
3) generating corresponding Raman spectra signals according to said generated Raman signals;
4)identifying specifically of the generated Raman spectrum signals, and generating and sending a status signal according to the identification results;
5) receiving said status signal, generating and transmitting a control signal based on said status signal;
6) controlling the trajectories of different kinds of cells/particles according to the received control signal, thus sorting different kinds of cells/particles samples.

Further, said step 1) comprises:
11) preparing the targeted cell/particle samples and the sorting protective liquid;

For the living cell samples, cells are transferred to a liquid mineral medium finally after cultivation and centrifugation in order to avoid the effect on the sorting results from different background spectra generated by different media;

The times and revolution speed of the centrifugal separation are determined by the kind and amount of the living cell samples, Preferably, the number of the centrifugal separation is 3 times, and the speed of the centrifugal separation is 3000 rpm.

For the nano-materials, particles and cell contents, the sample should be dissolved in a liquid mineral medium or pure water in order to avoid effect on the sorting results from different background spectra generated by different media;

The amount of the solid chemical composition required for the preparation of the buffer solution are calculated according to the relationship table between the buffer solution pH value and the ion dosage, then the solid chemical components are weighed and dissolved in pure water, shaking until dissolved completely, and adding pure water to a constant volume to obtain the sorting protective liquid;
12) injecting the targeted cell/particle solution as well as the sorting protective liquid;

The targeted cell/particle solution and sorting protective liquid obtained in step (11) are injected to specific locations of the microfluidic device respectively, the solution and liquid are driven by the injection pump and flowed through the targeted cell/particle injection channel, the first sorting protective liquid channel and the second sorting protective liquid channel separately in the microfluidic device in the way of laminar flow, and the flow rate of said targeted cell/particle solution and sorting protective liquid ranges from 0.1 mm/s to 100 mm/s respectively.

Further, said step 2) and step 3) comprise:
The mixture of the targeted cell/particle solution and the sorting protective liquid in the microfluidic device flows through the Raman spectrum analysis area in the detection and sorting area, a Raman signal is generated under the excitation of the Raman laser, and received by the Raman spectrometer, and a Raman spectrum signal is generated according to said Raman signal.

Further, the scanning step size of said Raman spectroscopy ranges from 0.1 ms to 10 ms, and the capture frequency ranges from 100 Hz to 10000 Hz.

Further, said step 4) comprises: the spectrum analysis software in the control software specifically identify the obtained Raman spectrum signals, and generates and sends a status signal according to the identification results.

Further, said step 5) comprises: the field controller receives a status signal generated by the spectrum analysis software in the control software, and controls the field generator closing or opening accordingly, when the field generator is in the closing state, there is no optical force, magnetic force, or electric force present in the cell sorting area in the detection and sorting area, the motion state of the targeted cell/particle is unaffected, the targeted cell/particle enters the first collection channel finally., when the field generator is in the opening state, there is Raman excitation laser force, magnetic force, or electric force present in the cell sorting area in the detection and sorting area, the motion state of the targeted cell/particle is affected, the deviations of the trajectory are produced, and the targeted cell/particle enters the second collection channel finally.

The present invention has the following advantages: The sorter for separating cells and particles in the present invention, which can effectively identify and sort cells, nano-materials, particles and cell inclusions with a size from nanometers to micrometers. Raman spectroscopy has characteristics with fast, non-invasive and higher information content so on, and as compared with methods such as fluorescence or radioisotope labelling, ect., it can provide a greater abundance of characteristic information about cells or particles in the same amount of time. It can be applied in various areas, such as material science, environmental microbiology, medicine, molecular biology, biological engineering and bio-energy so on, so as to analyze and sort cells/particles samples with high efficiency.

### BRIEF DESCRIPTION OF THE DRAWINGS

Figure 1 is a structural scheme of a Raman-activated sorter for separating cells and particles of the present invention;
Figure 2 is a structural scheme of the first embodiment of a Raman-activated sorter for separating cells and particles of the present invention;
Figure 3 is a structural scheme of the second embodiment of a Raman-activated sorter for separating cells and particles of the present invention;
Figure 4 is a structural scheme of the third embodiment of a Raman-activated sorter for separating cells and particles of the present invention;
Figure 5 is a structural scheme of the microfluidic device of the present invention;
Figure 6 is a Raman spectrum analysis result diagram of a Raman-activated sorter for separating cells and particles of the present invention;
Figure 7 is a diagram of the injection process of the targeted cell/particle solution and the sorting protective liquid of the present invention;
Figure 8 is a diagram of the converging process of the targeted cell/particle solution and the protective liquid of the present invention;
Figure 9 is a structural scheme of the Raman spectrum acquisition process of the mixture of the targeted cell/particle solution and the protective liquid under excitation of the Raman laser of the present invention;
Figure 10 is a structural scheme of the sorting process of the different targeted cells/particles different kinds of the present invention.

### DETAILED DESCRIPTION OF THE PRESENTLY PREFERRED EMBODIMENTS

The principles and features of the present invention is described detailed as below in combination with the figures. The mentioned embodiments should be used to explain the present invention, not be used to limit the protection scope of the present invention.

The detection targets of this invention are the targeted cells/particles, including cells, nano-materials, particles and cell inclusions. Said cells comprise viruses, microbial cells, fungal cells, plant cells and animal cells so on; Said nano-materials comprise gold nanoparticles, silver nanoparticles and magnetic nanoparticles so on; Said particles mentioned are a collection of pollens, dust, soil particles, sea salt particles and coal dust particles whose sizes range from nanometers to micrometers; Said cell inclusions comprises deoxyribonucleic acid (DNA), ribonucleic acid (RNA), protein, lipid, polysaccharide, and organelle so on.

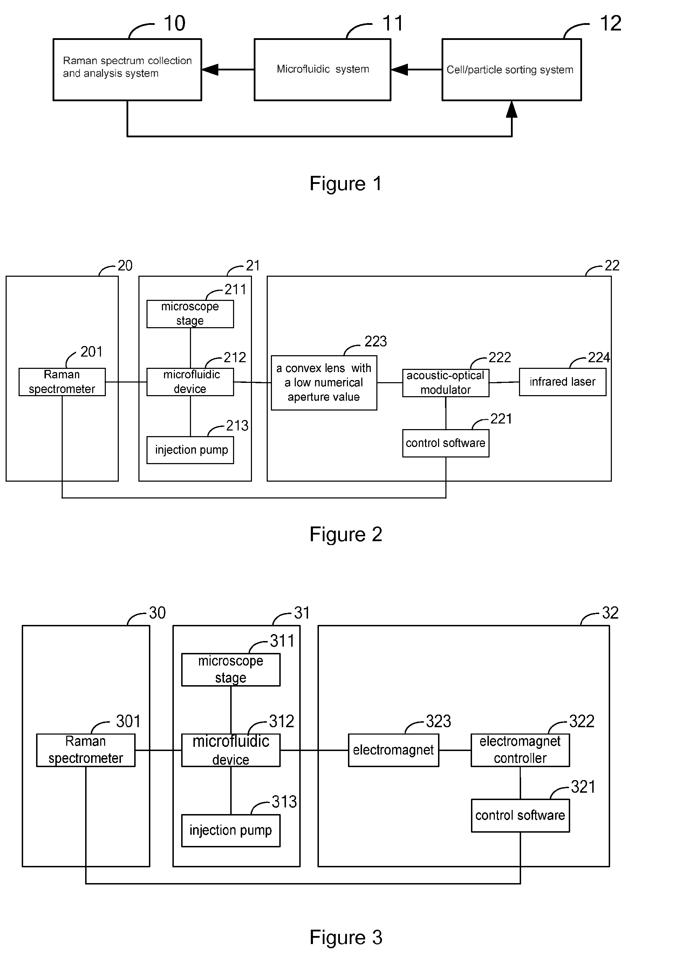

Figure 1 is a structural scheme of a Raman-activated sorter for separating cells and particles of the present invention. As shown in Figure 1, said Raman flow sorter for separating cells and particles comprises a Raman spectrum collection and analysis system 10, a microfluidic system 11, and a cell/particle sorting system 12; Said microfludic system 11 is connected with the Raman spectrum collection and analysis system 10, used for generating Raman signals of the targeted cells/particles under the excitation of a Raman laser with a wavelength ranging from 400 nm to 800 nm and sorting the targeted cells/particles; Said Raman spectrum collection and analysis system 10 is connected with the cell/particle sorting system 12, used for collecting Raman signals of the targeted cells/particles and generating Raman spectrum signals of the targeted cells/particles; Said cell/particle sorting system 12 is connected with the microfluidic system 11, used for sorting the targeted cells/particles by controlling said microfluidic system according to the received Raman spectrum signals.

Said Raman spectrum collection and analysis system mainly comprises a Raman spectrometer which can obtain the Raman spectra of the targeted cells/particles under excitation of a Raman laser with a wavelength ranging from 400 nm to 800 nm. With the surface-enhanced Raman technology, the intensity of the Raman spectrum signals can be strengthened by 6 orders of magnitude, which means the effective responding time of the Raman spectrum is shortened within 1 ms for cells/particles with a size from nanometers to micrometers, so as to achieve the purpose of rapid and high-throughput detection. When combination with confocal optical tweezers and epifluorescence technology, Raman spectroscopy can be used to identify and separate cells at the single cell level as well as particles with a size nanometers effectively.

The basic working principle of the Raman-activated sorter for separating cells and particles of the present invention is described as below: The information of the targeted cells/particles can be identified and analyzed by the Raman spectra, the Raman spectroscopy data can be analyzed automatically and the switching device for sorting cells can be controlled by computer. The specific cells/ particles can be controlled using technical means including optical, magnetic or electric field , and the cells/particles can be sorted into the different microfluidic channels by the microfluidic device.

The Raman-activated sorter for separating cells and particles of the present invention can be used to sort cells/particles with or without pre-treatment, which comprises surface-enhanced Raman labelling, magnetic nanoparticle labelling, stable isotope labelling and immune labelling so on. The settings in the system can be adjusted to maximize the sorting throughput for different kinds of cells/particles samples or different sorting requirements of the same sample.

Figure 2 is a structural scheme of the first embodiment of a Raman-activated sorter for separating cells and particles of the present invention. As shown in Figure 2, in this embodiment, Said Raman spectrum collection and analysis system 20 comprises a Raman spectrometer 201, said microfluidic system 21 comprises a microscope stage 211, a microfluidic device 212 connected with the microscope stage 211, and an injection pump 213 connected with the microfluidic device 212, said cell/particle sorting system 22 comprises a control software 221, an acoustic-optical modulator 222 connected with the control software 221, and an optical field generator connected with the acoustic-optical modulator 222 , said optical field generator comprises an infrared laser 224 and a convex lens 223 with a low numerical aperture value, said acoustic-optical modulator 222 is respectively connected with the infrared laser 224 and the low-aperture convex lens 223 whose numerical aperture value ranges from 0.18 to 0.23, said low-aperture convex lens 223 is connected with the microfluidic device 212, Said microfluidic device 212 is connected with the Raman spectrometer 201, and. Said Raman spectrometer 201 is connected with the control software 221.

Figure 3 is a structural scheme of the second embodiment of a Raman-activated sorter for separating cells and particles of the present invention. As shown in Figure 3 , in this embodiment, said Raman spectrum collection and analysis system 30 comprises a Raman spectrometer 301, said microfluidic system 31 comprises a microscope stage 311, a microfluidic device 312 connected with the microscope stage 311, an injection pump 313 connected with the microfluidic device 312, said cell/particle sorting system 32 comprises a control software 321, an electromagnet controller 322 connected with the control software 321, a magnetic field generator connected with the electromagnet controller 322, said magnetic field generator is an electromagnet 323, said electromagnet controller 322 is connected with the electromagnet 323, said electromagnet 323 is connected with the microfluidic device 312, said microfluidic device 312 is connected with the Raman spectrometer 301 , and said Raman spectrometer 301 is connected with the control software 321.

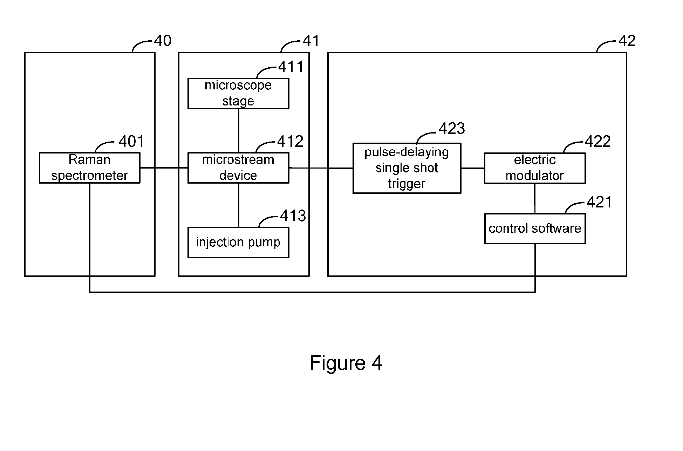

Figure 4 is a structural scheme of the third embodiment of a Raman-activated sorter for separating cells and particles of the present invention. As shown in Figure 4, in this embodiment, said Raman spectrum collection and analysis system 40 comprises a Raman spectrometer 401, said microfluidic system 41 comprises a microscope stage 411, a microfluidic device 412 connected with the microscope stage 411, an injection pump 413 connected with the microfluidic device 412, said cell/particle sorting system 42 comprises a control software 421, an electric modulator 422 connected with the control software 421, an electric field generator connected with the electric modulator 422, said electric field generator is a pulse-delaying single shot trigger 423, said electric modulator 422 is connected with the pulse-delaying single shot trigger 423, said pulse-delaying single shot trigger 423 is connected with the microfluidic device 412, said microfluidic device 412 is connected with the Raman spectrometer 401, and said Raman spectrometer 401 is connected with the control software 421.

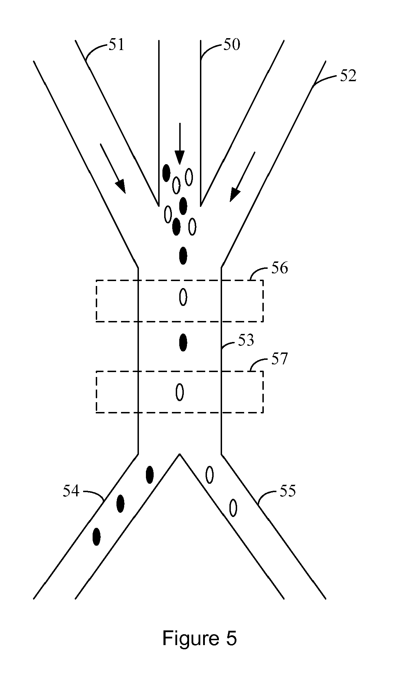

Figure 5 is a structural scheme of the microfluidic device of the present invention. As shown in Figure 5, said microfluidic device comprises injection channels, detection and sorting area, and collection channels. Said detection and sorting area comprises a Raman spectrum analysis area 56 and a cell-sorting area 57. Said injection channels comprises a targeted cell/particle channel 50, a first sorting protective liquid channel 51 and a second sorting protective liquid channel 52, said first sorting protective liquid channel 51 and second sorting protective liquid channel 52 lie on two sides of the targeted cell/particle channel 50, and are connected with it; Said detection and sorting area comprises a detection and sorting channel 53, which is connected with the targeted cell/particle channel 50, the first sorting protective liquid channel 51 and the second sorting protective liquid channel 52; Said collection channel comprises a first collection channel 54 and a second collection channel 55, both said first collection channel 54 and second collection channel 55 are connected with the detection and sorting channel 53. The targeted cells/particles shown in Figure 5 comprise two different kinds, which are illustrated by black and white ovals separately, the Raman signals are generated under the excitation of the targeted cells/particles in the Raman spectrum analysis area 56 using a Raman laser, and two different kinds of cells/particles are sorted different kinds in the cell sorting area 57, one kind of cells/particles can be collected to the first collection channel 54, and the other kind be collected to the second collection channel 55.

The internal diameter of said targeted cell/particle channel 50 ranges from 5 µm to 300 µm, with a length ranging from 1 mm to 50 mm; the internal diameter of the first sorting protective liquid channel 51 and the second sorting protective liquid channel 52 ranges from 10 µm to 300 µm, with a length ranging from 1 mm to 50 mm; the internal diameter of the detection and sorting channel 53 ranges from 10µm to 400µm, with a length ranging from 5mm to 100 mm; the internal diameter of the first collection channel 54 and the second collection channel 55 ranges from 5 µm to 300 µm, with a length ranging from 1 mm to 50 mm.

The Raman-activated sorter and sorting method for separating cells and particles is described detailed as below in combination with the following two embodiments.

### Embodiment 1: Construction of the Raman-activated sorter for separating cells and particles

### 1) The Raman spectrum collection and analysis system

The Raman-activated sorter for separating cells and particles is constructed in present embodiment, the Raman spectrometer in the Raman spectrum collection and analysis system is a confocal microscopy Raman spectrometer (Princeton Instrument, US), with an excitation wavelength of 514.5nm(Coherent, Innova 90-5 Ar-ion). The nano-micron scale microscope is a Leika DM-IRB microscope with a 63 times objective (Leica, HCX PL APO). The Raman spectrum collection and analysis software is Labspec 5.0.

### 2) The microfluidic system

The microfluidic system is constructed in the the Raman-activated sorter for separating cells and particles in present embodiment, the internal diameter of the sample injection channel of the microfluidic device is 100 µm, and the length is 20 mm; the internal diameter of the protective liquid channel is 100 µm, and the length is 20 mm; the internal diameter of the detection and sorting area is 300µm, the length is 0mm; the internal diameter of the first collection channel is 200µm ,and the length is 20mm; the internal diameter of the second collection channel is 100 µm, and the length is 20 mm. The injection pump with 200 Series(Kd Scientific, US) is used, with a flow rate ranging from 0.1 mm/s to 100 mm/s, to keep the samples as laminar flow.

### 3) The sorting system for separating cells and particles

The sorting system for separating cells and particles is constructed in the Raman-activated sorter for separating cells and particles in present embodiment, the computer software Labspec 5.0 is used. The field controller is consist of an acoustic-optical modulator and an optical field generator. The model of the acoustic-optical modulator is AOM ATD-274HD6 (IntraAction, Bellwood, IL), and the optical field generator is a TTL pulse laser with an accurate delay time 1064nm(LCS-DTL-322, Laser 2000 Ltd, US).

### Embodiment 2: The sorting method for isotope-labelled cells using the Raman-activated sorter for separating cells and particles

### 1) preparing the targeted cells/particles samples and the sorting protective liquid

The culture medium for the cell is liquid mineral medium, It contains 2.5 g Na₂HPO₄, 2.5 g KH₂PO₄, 1.0 g NH₄Cl, 0.1 g MgSO₄·7H₂O, 10 µL saturated CaCl₂, 10 µL saturated FeSO₄ and 1 mL Bauchop & Elsden in one liter liquid mineral medium. Wherein, one liter of Bauchop & Elsden solution contains 10.75g MgSO₄, 4.5g FeSO₄·7H₂O, 2.0g CaCO₃, 1.44g ZnSO₄·7H₂O, 1.12g MnSO₄·4H₂O, 0.25g CuSO₄·5H₂O, 0.28g CoSO₄·7H₂O, 0.06g H₃BO₃ and 51.3 mL saturated HCl solution.

One hundred microliter sea water is added into 10 mL liquid mineral medium with 1.70 mg ¹³C-NaHCO₃ as the sole carbon source, the final concentration is 2 mM. Shaking and culturing under the condition of 30 degrees for 14 days, then the cell solution awaiting for sorting is obtained.

Dissolving 10.86105 g Na₂HPO₄·2H₂O and 6.08595 g NaH₂PO₄·2H₂O into 100 mL pure water, shaking until dissolved completely, and adding pure water to a final volume of 1.0 L again, then the sorting protective liquid is obtained.

### 2) injecting the targeted cell/particle solution and the sorting protective liquid

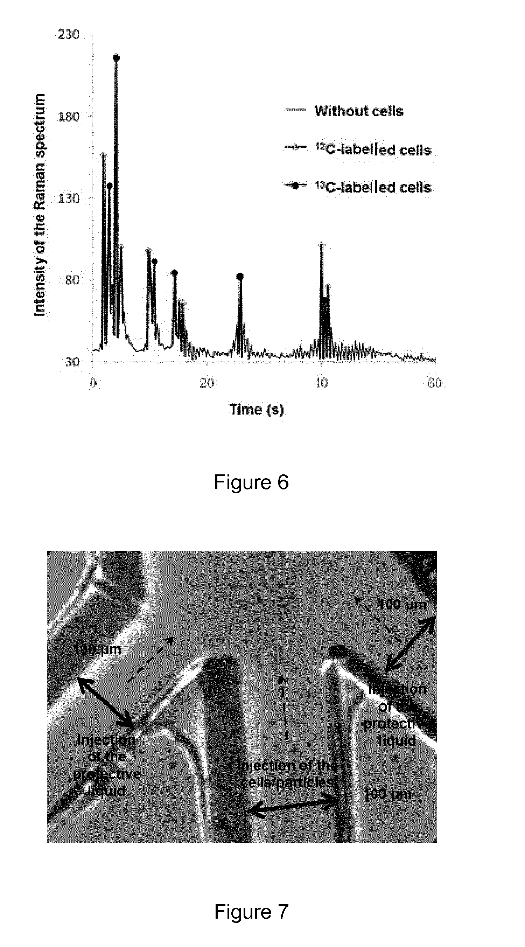

The sample solution with 15µL and sorting protective liquid with 150 µL obtained in step (1) are injected into the specific locations of the microfluidic device respectively, the solution and liquid are driven by the injection pump and flowed through the sample injection channel and the protective liquid injection channels in the microfluidic device at the flow rate of 1 mm/s in the way of laminar flow respectively , as shown in Figure 7.

### 3) generating the Raman spectrum

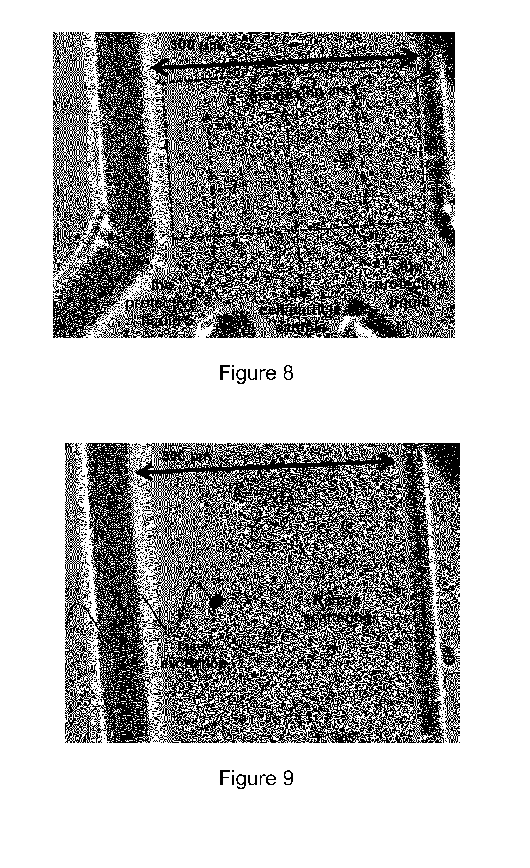

As shown in Figure 8, the mixture of the sample solution and the sorting protective liquid in the microfluidic device is flowed through the Raman spectrum analysis area, and irradiated under an excitation of a Raman laser with a wavelength of 532nm.Then the Raman spectra is generated, as shown in Figure 8. During this process, the scanning step size of Raman excitation is 1 ms, and the capture frequency of Raman spectrum is 1000Hz.

### 4) identifying different kinds of targeted cells/particles

The information identification software can analyse and calculate the received Raman spectra automatically, and identify the phenotype of the targeted cell. In the cell solution, the microbial cells which can use ¹³C-NaHCO₃ as the carbon source contain ¹³C isotope, therefore, their Raman spectra differ from those which cannot use ¹³C-NaHCO₃ as the carbon source. As shown in Figure 6, the black curve without marks indicates the intensity of a specific Raman peak of the solution without any microbial cells, and this solution is marked as state 0 automatically by the software; ◇-marked curve indicates the intensity of this specific Raman peak of non-¹³C-labelled microbial cells in the solution, and this solution is marked as state 0 automatically by the software; ●-marked curve indicates the intensity of this specific Raman peak of ¹³C-labelled microbial cells in the solution, and this solution was marked as state 1 automatically by the software.

### 5) sorting different kinds of targeted cells/particles

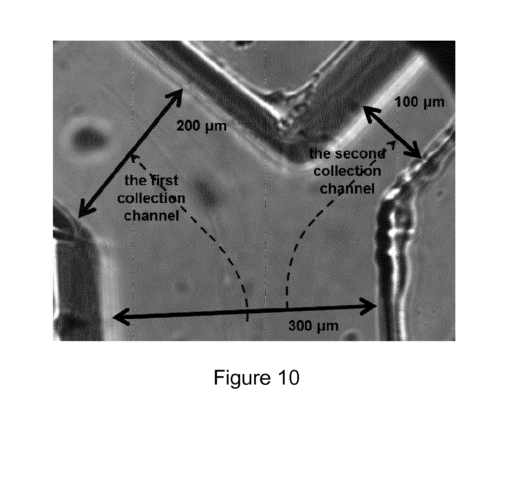

The signals marked with 0/1 and generated by the information identification software are received by the acoustic-optical controller. In state 0, the acoustic-optical controller keeps the cell/particle sorting system shut down, and no laser pulse is generated by the TTL pulse laser field generator with an accurate delay time of 1064 nm (DG535, Stanford Research System, Palo Alto, CA), therefore, no infrared laser field force exists in the cell sorting area, and the trajectory of the non-¹³C-labelled microorganisms is not changed, so that the microbial cells enters the first collection channel finally. In state 1, the acoustic-optical controller keeps the cell/particle sorting system starting state, and a laser pulse is generated by the TTL pulsed laser field generator with an accurate delay time of 1064 nm, the infrared laser force exists in the cell sorting area, and can make the trajectory of the ¹³C-labelled microorganisms produce deviations, so that the microbial cells enters the second collection channel finally. The above-mentioned processes are shown in Figure 10.

### 6) Retrieving the sorted targeted cells/particles

The microorganisms obtained in the first collection channel and labelled without ¹³C , the microorganisms obtained in the second collection channel and labelled with ¹³C labelling, they are respectively collected into corresponding bottles. The ¹³C-labelled microorganisms could be cultivated using ¹³C-NaHCO₃ as the carbon source, so that the microorganisms can be carried out molecular biology operation further, such as cell culturing, taxonomic identification, metagenomic study and functional gene cloning so on.

The above-mentioned embodiment is only preferred embodiment of the present invention and shall not be used to limit the present invention. Any improvement, modification, replacement, combination and simplification within the spirit and principle of the present invention shall be considered as equivalent replacement and within the protection scope of the present invention.

## Claims

1. A sorter for separating cells and particles, wherein comprises a Raman spectrum collection and analysis system, a microfluidic system and a cell/particle sorting system; Said microfluidic system is connected with said Raman spectrum collection and analysis system, used for generating Raman signals of the targeted cells/particles under the excitation of a Raman laser and sorting the targeted cells/particles; Said Raman spectrum collection and analysis system is connected with said cell/particle sorting system, used for collecting Raman signals of the targeted cells/particles and generating Raman spectrum signals of the targeted cells/particles; Said cell/particle sorting system is connected with said microfluidic system, used for sorting the targeted cells/particles by controlling said microfluidic system according to the received Raman spectrum signals.

2. The sorter for separating cells and particles of claim 1, wherein said Raman spectrum collection and analysis system comprises a Raman spectrometer, said microfluidic system comprises a microscope stage, a microfluidic device and an injection pump, and said cell/particle sorting system comprises a control software, a field controller and a field generator; Said Raman spectrometer is respectively connected with the microfluidic device and the control software; said microscope stage is connected with the microfluidic device; said microfluidic device is connected with the injection pump, said control software is connected with the field controller; said field controller is connected with the field generator; the field generator is connected with the microfluidic device; said microscope stage is used to transport targeted cells/particles and protective liquid to the microfluidic device; said injection pump is used to regulate the speed at which targeted cells/particles and protective liquid are transported to the microfluidic device; said control software is used to identify specificity of the generated Raman spectrum signals and generate and send out a status signal at the same time; said field controller is used to generate a control signal according to the received status signal, and send said control signal to said field generator; said field generator is used to carry out the opening/closing operation on the basis of the control signals received.

3. The sorter for separating cells and particles of claim 2, wherein said microfluidic device comprises injection channels, detection and sorting area, and collection channels; Said injection channels are connected with the detection and sorting area, used for injecting targeted cells/particles and the protective liquid and converging them; Said detection and sorting area is connected with the collection channels; Said detection and sorting area comprises Raman spectrum analysis area and cell sorting area, Said Raman spectrum analysis area is used to generate Raman signals of the mixed targeted cells/particles and the protective liquid under excitation of the Raman laser, and said cell sorting area is used to sort the targeted cells/particles; Said collection channels are used to collect the sorted targeted cells/particles.

4. The sorter for separating cells and particles of claim 3, wherein said protective liquid is a buffer solution with the pH value ranging from 5 to 10.

5. The sorter for separating cells and particles of claim 4, wherein said injection channels comprise a targeted cell/particle channel, a first sorting protective liquid channel and a second sorting protective liquid channel, Said first sorting protective liquid channel and second sorting protective liquid channel are lie on both sides of the targeted cell/particle channel, and are connected with it; Said detection and sorting area comprises a detection and sorting channel, said detection and sorting channel is connected with the targeted cell/particle channel, the first and second sorting protective liquid channels; Said collecting channels comprise a first collecting channel and a second collecting channel, and said first collecting channel and second collecting channel are connected with the detection and sorting channel.

6. The sorter for separating cells and particles of claim 2, wherein said field controller is an acoustic-optical modulator, and said field generator is an optical field generator.

7. The sorter for separating cells and particles of claim 2, wherein said field controller is an electric modulator, and said field generator is an electric field generator.

8. The sorter for separating cells and particles of claim 2, wherein said field controller is an electromagnet controller, and said field generator is a magnetic field generator.

9. A sorting method for separating cells and particles , wherein comprises:
1) converging the cells/particles samples and the sorting protective liquid to form a mixture;
2) generating Raman signals of said mixture under excitation of a Raman laser;
3) generating corresponding Raman spectra signals according to said generated Raman signals;
4) identifying specifically of the generated Raman spectrum signals, and generating and sending a status signal according to the identification results;
5) receiving said status signal, generating and transmitting a control signal based on said status signal;
6) controlling the trajectories of different kinds of cells/particles according to the received control signal, thus sorting different kinds of cells/particles samples.

10. The sorting method for separating cells and particles of claim 9, wherein said step 1) comprises:
11) preparing the targeted cell/particle samples and the sorting protective liquid;
For the living cell samples, cells are transferred to a liquid mineral medium finally after cultivation and centrifugation in order to avoid the effect on the sorting results from different background spectra generated by different media;
For the nano-materials, particles and cell contents, the sample should be dissolved in a liquid mineral medium or pure water in order to avoid effect on the sorting results from different background spectra generated by different media;
The amount of the solid chemical composition required for the preparation of the buffer solution are calculated according to the relationship table between the buffer solution pH value and the ion dosage, then the solid chemical components are weighed, and dissolved and shaked oscillated in pure water, and the pure water is added to a constant volume to obtain the sorting protective liquid again after the solid chemical components are all dissolved;
12) injecting the targeted cell/particle solution as well as the sorting protective liquid;
The targeted cell/particle solution and sorting protective liquid obtained in step (11) are injected to specific locations of the microfluidic device respectively, the solution and liquid are driven by the injection pump and flowed through the targeted cell/particle injection channel, the first sorting protective liquid channel and the second sorting protective liquid channel separately in the microfluidic device in the way of laminar flow, and the flow rate of said targeted cell/particle solution and sorting protective liquid ranges from 0.1 mm/s to 100 mm/s respectively.

11. The sorting method for separating cells and particles of claim 10, wherein said step 2) and step 3) comprise:
The mixture of the targeted cell/particle solution and the sorting protective liquid inside the microfluidic device flows through the Raman spectrum analysis area in the detection and sorting area, a Raman signal is generated under the excitation of the Raman laser and received by the Raman spectrometer, and then a Raman spectrum signal is generated according to said Raman signal.

12. The sorting method for separating cells and particles of claim 11, wherein the scanning step size of said Raman spectroscopy ranges from 0.1 ms to 10 ms, and the capture frequency ranges from 100 Hz to 10000 Hz.

13. The sorting method for separating cells and particles of claim 11 or 12, wherein said step 4) comprises : the spectrum analysis software in the control software specifically identify the obtained Raman spectrum signals, and generates and sends a status signal according to the identification results.

14. The sorting method for separating cells and particles of claim 13, wherein said step 5) comprises: the field controller receives a status signal generated by the spectrum analysis software in the control software, controls the field generator closing or opening accordingly., when the field generator is in the closing state, there is no optical force, magnetic force, or electric force present in the cell sorting area in the detection and sorting area, the motion state of the targeted cell/particle is unaffected, the targeted cell/particle enters the first collection channel finally, when the field generator is in the opening state, there is Raman excitation laser force, magnetic force, or electric force present in the cell sorting area in the detection and sorting area, the motion state of the targeted cell/particle is affected, the deviations of the trajectory are produced, and the targeted cell/particle enters the second collection channel finally.
